**Europäisches Patentamt**

**European Patent Office**

**Office européen des brevets**

(11) Veröffentlichungsnummer: **0 071 232**
**B1**

(12) **EUROPÄISCHE PATENTSCHRIFT**

(45) Veröffentlichungstag der Patentschrift:
**13.11.85**

(21) Anmeldenummer: **82106749.3**

(22) Anmeldetag: **26.07.82**

(51) Int. Cl.⁴: **H 04 B 9/00, H 04 J 4/00**

(54) Breitbandkommunikationssystem.

(30) Priorität: **28.07.81 DE 3129752**
**19.04.82 DE 3214277**

(43) Veröffentlichungstag der Anmeldung:
**09.02.83 Patentblatt 83/6**

(45) Bekanntmachung des Hinweises auf die Patenterteilung:
**13.11.85 Patentblatt 85/46**

(84) Benannte Vertragsstaaten:
**AT CH DE FR GB IT LI NL SE**

(56) Entgegenhaltungen:
**EP - A - 0 012 979**
**DE - A - 2 910 497**

**ELEKTRONIK, Heft 2, 30. Januar 1981**
**FRANZIS-VERLAG GmbH, München "Lichtleiter -**
**Versuchsnetz in Betrieb" Seiten 24, 26**
**NACHRICHTENTECHNISCHE ZEITSCHRIFT, Band 32,**
**Heft 3, 1979, VDE-VERLAG GmbH, Berlin (West)**
**HELMUT BAUCH "Künftige Kommunicationstechnik mit**
**Lichtleitern" Seiten 150-153**
**NTG-Fachberichte, Band 73, 1980, Seiten 46 bis 50**

(73) Patentinhaber: **Siemens Aktiengesellschaft, Berlin und**
**München Wittelsbacherplatz 2, D-8000 München 2 (DE)**

(72) Erfinder: **Strehl, Herbert, Dipl.-Ing., Drozzaweg 15,**
**D-8000 München 70 (DE)**

# Beschreibung

Die Erfindung bezieht sich auf ein Breitbandkommunikationssystem mit jeweils zwischen einer Vermittlungsstelle und einer Teilnehmerstelle verlaufenden Lichtwellenleiter-Teilnehmeranschlußleitungen für TV- und/oder Stereoton-Breitbandsignale und demgegenüber schmalbandige Digitalkommunikationssignale, etwa 64-kbit/s-Digital-Fernsprechsignale, Bildschirmtextsignale, 8-kbit/s-Steuersignale, Programmwahlsignale.

In einem Lichtwellenleiter-Breitbandkommunikationssystem können die Teilnehmeranschlußleitungen jeweils einen einzigen, in beiden Übertragungsrichtungen ausgenutzten Lichtwellenleiter aufweisen oder aber jeweils zwei getrennte Lichtwellenleiter für die beiden Übertragungsrichtungen. Dabei sind im ersteren Falle beim derzeitigen Stand der Lichtwellenleiter-Technik über einen Lichtwellenleiter, über den in Richtung von der Vermittlungsstelle zur Teilnehmerstelle hin TV- und/oder Ton-Breitbandsignale übertragen werden, in einem Rückkanal von der Teilnehmerstelle zur Vermittlungsstelle hin nur Steuersignale oder relativ einfache Antworten bei interaktiven Diensten übertragbar; sollen darüber hinausgehend (ggf. mehrere) 64-kbit/s-Digitalsignale und (ggf. mehrere) 8-kbit/s-Digitalsignale etwa für Digitalfernsprechen, Bildschirmtext, Faksimile und für die Signalisierung und Synchronisierung solcher Schmalband-Kommunikationsdienste zwischen Teilnehmerstelle und Vermittlungsstelle bzw. umgekehrt übertragen werden, so werden zwei Lichtwellenleiter je Teilnehmeranschluß vorgesehen, nämlich für jede Übertragungsrichtung ein eigener Lichtwellenleiter (ntz 32[1979] 3, 150 ... 153), wobei dann über die beiden Lichtwellenleiter ggf. auch Videokommunikationssignale für eine Bildfernsprechkommunikation geführt werden können.

Eine solche Signalübertragung über Übertragungsrichtungseigene Lichtwellenleiter erfordert für die Übertragung in Richtung zur Teilnehmerstelle hin eine Bündelung von im Rahmen einseitig gerichteter Kommunikationsdienste, wie Fernsehen und Hörfunk, zu verteilenden TV- und ggf. Stereoton-Signalen mit im Rahmen bidirektionaler Kommunikationsdienste, wie z. B. Fernsprechen, Fernschreiben, Datenkommunikation, zu übermittelnden Telekommunikationssignalen und bringt damit ggf. eine Verknüpfung von Kommunikationsdiensten unterschiedlicher Betreiber mit sich, die aus telekommunikationspolitischen oder -rechtlichen Gründen oder auch aus technischen Gründen unerwünscht sein kann, etwa wenn es sich — zur Vermeidung eines teilnehmerseitigen zusätzlichen Decodieraufwandes — bei den Breitbandsignalen um Analogsignale (FM- oder PPM-Signale) handelt; es wären dann Analog-Breitbandsignale mit Digital-Kommunikationssignalen gebündelt über den Lichtwellenleiter von der Vermittlungsstelle zur Teilnehmerstelle hin zu übertragen. Im Prinzip wäre dies bei kombinierter Anwendung von Frequenzmultiplex- und Zeitmultiplex-Techniken realisierbar; praktisch bereitet die Kombination von Frequenzmultiplex- und Zeitmultiplextechniken allerdings Schwierigkeiten und verlangt vom Übertragungssystem Verzerrungsfreiheit und hohe Linearität.

Es ist auch schon (aus NTG-Fachberichte, Band 73, 1980, Seiten 46 bis 50) ein Breitbandkommunikationssystem mit jeweils zwischen Vermittlungsstelle und Teilnehmerstelle verlaufenden, jeweils zwei Lichtwellenleiter aufweisenden Teilnehmeranschlußleitungen für TV- und/oder Stereoton-Breitbandsignale und demgegenüber schmalbandige Digitalkommunikationssignale bekannt, in dem über den einen Lichtwellenleiter nur die TV- und/oder Stereoton-Breitbandsignale von der Vermittlungs- bzw. Verteilstelle zur Teilnehmerstelle übertragen werden und über den anderen Lichtwellenleiter alle Digitalkommunikations-Schmalbandsignale, insbesondere 64-kbit/s-Digitalsignale, zwischen Vermittlungsstelle und Teilnehmerstelle und umgekehrt sowie Programmwahlsignale von der Teilnehmerstelle zur Vermittlungs- bzw. Verteilstelle im Multiplex übertragen werden.

Die Erfindung stellt sich nun die Aufgabe, eine vorteilhafte Erweiterung eines solchen Breitbandkommunikationssystems anzugeben.

Die Erfindung betrifft ein Breitbandkommunikationssystem mit jeweils zwischen Vermittlungsstelle und Teilnehmerstelle verlaufenden, jeweils zwei Lichtwellenleiter aufweisenden Teilnehmeranschlußleitungen für TV- und/oder Stereoton-Breitbandsignale und demgegenüber schmalbandige Digitalkommunikationssignale, in dem über den einen Lichtwellenleiter nur die TV- und/oder Stereoton-Breitbandsignale von der Vermittlungs- bzw. Verteilstelle zur Teilnehmerstelle übertragen werden und über den anderen Lichtwellenleiter alle Digitalkommunikations-Schmalbandsignale, insbesondere 64-kbit/s-Digitalsignale, zwischen Vermittlungsstelle und Teilnehmerstelle und umgekehrt sowie Programmwahlsignale von der Teilnehmerstelle zur Vermittlungs- bzw. Verteilstelle im Multiplex übertragen werden; ein solches Breitbandkommunikationssystem ist erfindungsgemäß dadurch gekennzeichnet, daß über den genannten anderen Lichtwellenleiter auch Bidirektional-Breitband-Bildkommunikation-Digitalsignale sowohl zwischen Vermittlungsstelle und Teilnehmerstelle als auch umgekehrt übertragen werden.

Die Erfindung bringt den Vorteil mit sich, daß in dem Breitbandkommunikationssystem die TV- und Stereoton-Programmverteilung einerseits und die bidirektionale Schmalband-Digitalkommunikation und auch Bildtelefon-Digitalkommunikation andererseits unabhängig voneinander, ggf. auch nacheinander, realisiert werden können; von Vorteil ist weiterhin, daß die zu ihrer Verwirklichung benötigte Technologie bereits heute den praktischen Erfordernissen genügt: So können in weiterer Ausgestaltung der Erfindung die Digitalkommunikationssignale der beiden Übertragungsrichtungen über den genannten anderen Lichtwellenleiter im Zeitgetrenntlageverfahren übertragen werden, so daß in der optischen Ebene eine Entkopplung der Signale der beiden Übertragungsrichtungen beispeilsweise durch Farbfilter oder hochwertige Richtungskoppler nicht notwendig ist, vielmehr ein einfacher (etwa 3-dB-)Koppler zwischen dem genannten anderen Lichtwellenleiter einerseits und einem vom jeweiligen elektro-optischen Wandler kommenden Lichtwellenleiter bzw. einem zum jeweiligen opto-elektrischen Wandler führenden Lichtwellenleiter andererseits genügt.

Die Breitbandsignale können über den genannten einen Lichtwellenleiter vorteilhafterweise auf analogmodulierten Trägern im Frequenzmultiplex übertragen werden, während die Digitalkommunikationssignale vorteilhafterweise in Zeitmultiplex gebündelt über den genannten anderen Lichtwellenleiter übertragen werden können.

Anhand der Zeichnung wird die Erfindung noch näher erläutert.

Dabei zeigen

Fig. 1 ein im Prinzip bekanntes Breitbandkommunikationssystem und Fig. 3 ein Ausführungsbeispiel eines Breitbandkommunikationssystem gemäß der Erfindung;

Fig. 2 und Fig. 4 verdeutlichen für solche Breitbandkommunikationssysteme den Zeitablauf einer Signalübertragung im Zeitgetrenntlageverfahren.

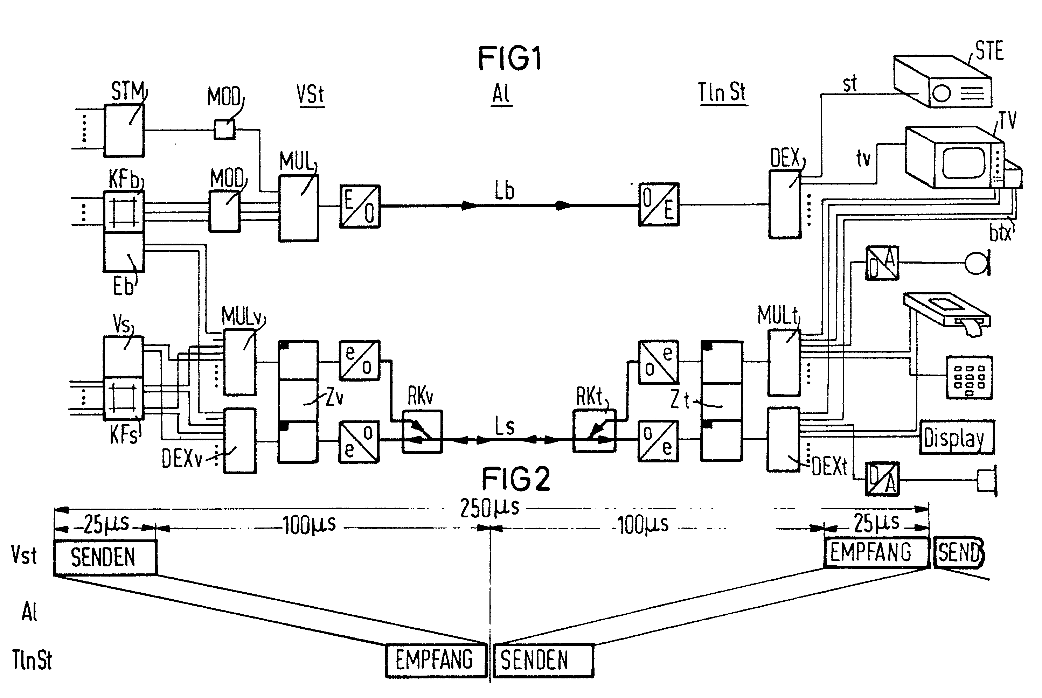

Die Zeichnung Fig. 1 zeigt schematisch in einem zum Verständnis der Erfindung erforderlichen Umfang ein im Prinzip bekanntes Breitbandkommunikationssystem. In diesem Breitbandkommunikationssystem ist eine Teilnehmerstelle TlnSt über eine zwei — z.B. durch Gradientenfasern mit 50 μm Kerndurchmesser und 150 μm Manteldurchmesser gebildete — Lichtwellenleiter Lb, Ls aufweisende Teilnehmeranschlußleitung Al mit der zugehörigen Vermittlungsstelle VSt verbunden, wobei in Fig. 1 angedeutet ist, daß die Teilnehmerstelle TlnSt für Digitalfernsprechen, Faksimiledienst, Bildschirmtext, Tastwahl und Displayanzeige sowie TV- und Stereoton-Empfang eingerichtet sein kann.

Über den einen Lichtwellenleiter Lb werden von der Vermittlungsstelle VSt her nur die TV- und/oder Stereoton-Breitbandsignale zur Teilnehmerstelle TlnSt hin übertragen. In Fig. 1 ist dazu angedeutet, daß die Breitbandsignale der jeweils zu dem betreffenden Teilnehmer zu übertragenden TV-Programme über ein Breitband-Koppelfeld KFb —, beispielsweise der aus DE-AS 28 28 662, DE-OS 29 32 588 oder DE-OS 29 32 587 bekannten Art, — und jeweils über einen nachfolgenden Analogmodulator MOD, beispielsweise einen das betreffende Breitbandsignal in eine jeweils eigene Trägerfrequenzlage umsetzenden Frequenzmodulator, einem in der Vermittlungsstelle VSt teilnehmerindividuell vorgesehenen, beispielsweise mit ausgangsseitig zusammengeschalteten Bandpässen gebildeten Breitbandsignalmultiplexer MUL zugeführt werden, der über einen elektro-optischen Wandler E/O zum Lichtwellenleiter Lb führt; ebenso wird auch das durch einen beispielsweise mit Frequenzumsetzern eines Trägerfrequenz-Tonkanalsystems MSt15 zu realisierenden Multiplexer STM aus den Stereotonprogrammsignalen gebildete Breitbandsignal über einen Analogmodulator MOD dem Breitbandsignalmultiplexer MUL zugeführt.Dem den Lichtwellenleiter Lb teilnehmerstellenseitig abschließenden opto-elektrischen Wandler O/E ist in dem Breitbandkommunikationssystem nach Fig. 1 ein Breitbandsignal-Demultiplexer DEX nachgeschaltet, an den über entsprechenden Anschlußleitungen tv bzw. st entsprechende TV-Empfänger TVE bzw. Stereotonempfänger STE angeschlossen sind.

Über den anderen Lichtwellenleiter Ls werden alle Digitalkommunikations-Schmalbandsignale von der Vermittlungsstelle VSt zur Teilnehmerstelle TlnSt und in umgekehrter Richtung von der Teilnehmerstelle TlnSt zur Vermittlungsstelle VSt übertragen. Dabei werden in der Vermittlungsstelle VSt über ein Schmalbandkoppelfeld KFs — beispielsweise der aus AT-PS 354 527 bekannten Art — durchvermittelte (z. B. 64-kbit/s-)Digital-Fernsprechsignale, Faksimilesignale und von der Vermittlungssteuerung Vs herrührende (z. B. 8-kbit/s-)Steuersignale sowie Bildschirmtext-(Btx)Signale und von der Einstelleinrichtung Eb des Breitband-Koppelfeldes KFb herrührende Quittungssignale in einem in der Vermittlungsstelle VST teilnehmerindividuell vorgesehenen — zusammen mit einem entsprechenden Demultiplexer DEXv beispielsweise mit Multiplexgeräten ZD 1000 C1 und ZD1000 E10 für ein 64-kbit/s-Multiplexsignal und einem Multiplexgerät DSE64K/2 für die Zusammenfassung von 64-kbit/s-Signalen zu einem 2,048-Mbit/s-Multiplexsignal zu realisierenden — Multiplexer MULv zu einem dann zur Teilnehmerstelle TlnSt hin zu übertragenden Multiplexsignal, im Beispiel Zeitmultiplexsignal, zusammengefaßt; ein in der umgekehrten Übertragungsrichtung von der Teilnehmerstelle TlnSt zur Vermittlungsstelle VSt gelangtes Multiplexsignal, insbesondere Zeitmultiplexsignal, wird in dem entsprechenden Demultiplexer DEXv in die entsprechenden Einzelsignale, beispielsweise über das Schmalband-Koppelfeld KFs durchvermitteltes (z. B. 64-kbit/s)-Digital-Fernsprechsignal und Faksimilesignal, der Vermittlungssteuerung Vs zuzuführendes (z. B. 8-kbit/s-)Steuersignal sowie Bildschirmtextsignal und der Einstelleinrichtung. Eb des Breitbandkoppelfeldes KFb zuzuführendes Programmwahlsignal, aufgefächert.

Eine entsprechende Signalbündelung bzw. -entbündelung findet — jeweils in umgekehrter Übertragungsrichtung — in der Teilnehmerstelle TlnSt statt, wozu dort ein entsprechender Multiplexer MULt bzw. Demultiplexer DEXt vorgesehen ist.

In der Vermittlungsstelle VSt ist mit dem Ausgang des dort vorgesehenen teilnehmerindividuellen Multiplexers MULv der elektrische Anschluß eines elektro-optischen Wandlers e/o verbunden; der Eingang des in der Vermittlungsstelle VSt vorgesehenen Demultiplexers DEXv ist mit dem Ausgang eines opto-elektrischen Wandlers e\o verbunden. Die optischen Anschlüsse dieser beiden Wandler sind über einen Glasfaser-Richtungskoppler RKv mit dem Lichtwellenleiter Ls verbunden.

In entsprechender Weise ist in der Teilnehmerstelle TlnSt der Lichtwellenleiter Ls über einen Glasfaser-Richtungskoppler RKt mit dem optischen Ausgang eines elektro-optischen Wandlers o\e und dem optischen Eingang eines opto-elektrischen Wandlers o/e verbunden, wobei der elektrische Eingang des elektro-optischen Wandlers o\e mit dem Ausgang des genannten Multiplexers MULt und der elektrische Ausgang des opto-elektrischen Wandlers o/e mit dem Eingang des genannten Demultiplexers DEXt verbunden ist. Mit den Eingängen des Multiplexers MULt bzw. den Ausgängen des Demultiplexers DEXt sind dann die einzelnen Schmalbandkommunikations-Endgeräte bzw. -teilgeräte verbunden, ohne daß dies hier noch weiter erläutert werden müßte.

An die Glasfaser-Richtungskoppler RK, die hier ebenfalls nicht weiter erläutert zu werden brauchen, da Glasfaser-Richtungskoppler an sich (z. B. aus nachrichten elektronik [1979]1, 18) bekannt sind, werden keine besonderen Anforderungen hinsichtlich der Entkopplung der Multiplexsignale der beiden Übertragungsrichtungen voneinander gestellt, wenn, wie dies auch in Fig. 1 angedeutet ist, die Multiplexsignale der beiden Übertragungsrichtungen im Zeitgetrenntlageverfahren über den Lichtwellenleiter Ls übertragen werden. In dem in Fig. 1 dargestellten Breitbandkommunikationssystem ist dazu in der Vermittlungsstelle VSt zwischen Multiplexer bzw. Demultiplexer MULv, DEXv und elektro-optischem bzw. opto-elektrischem Wandler e/o, e\o eine beispielsweise mit einem Schieberegister zu realisierende Pufferschaltung Zv vorgesehen; in entsprechender Weise ist in der Teilnehmerstelle TlnSt zwischen Multiplexer MULt und Demultiplexer DEXt einerseits und elektro-optischem Wandler o e und opto-elektrischem Wandler o/e andererseits eine entsprechende Zeitgetrenntlage-Pufferschaltung Zt vorgesehen.

Die somit bewirkte Verlagerung der eigentlichen Richtungstrennung von der optischen Ebene in die elektrische (und digitale) Ebene hat den Vorteil, daß die Zeitgetrenntlage-Steuerschaltungen Zv, Zt in herkömmlicher IC-Technologie (beispielsweise mit Schieberegistern) realisierbar sind. Die mit dem Einsatz des Zeitgetrenntlageverfahrens verbundene Tatsache, daß die Bitfolgefrequenz in den Signalbursts auf der Leitung ein Mehrfaches der Nutzbitrate beträgt, kann beim Einsatz auf dem Lichtwellenleiter Ls vorteilhafterweise außer Betracht bleiben, weil hier zum einen keine hochfrequente Störstrahlung auftritt und zum anderen die Leitungsdämpfung des Lichtwellenleiters nicht mit zunehmender Bitrate ansteigt, die Reichweite davon also nicht wie bei einer Cu-Leitung beeinflußt wird. Bei der Festlegung der Parameter für die Zeitgetrenntlageübertragung, beispielsweise von Burstlänge und Burstpause, ist es deshalb zweckmäßig, die bei der Signalübertragung über einen Lichtwellenleiter maximal mögliche Reichweite zugrunde zu legen.

Ein entsprechendes Beispiel des zeitlichen Ablaufs dere Burstübertragung wird durch Fig. 2 verdeutlicht. Nach diesem Beispiel steht für einen 25 μs dauernden Digitalsignalblock (Burst) eine maximale Signallaufzeit von 100 μs je Übertragungsrichtung zur Verfügung, was einer Lichtwellenleiterlänge von etwa 20 km entspricht. Dabei wird davon ausgegangen, daß, wie dies an sich (aus DE-AS 25 11 619) bekannt ist, in beiden Übertragungsrichtungen abwechselnd Bursts mit den Digitalsignalworten jeweils zweier aufeinanderfolgender (125 μs-)Pulsrahmen übertragen werden. Verwendet man dabei den in Digital-Vermittlungen ohnehin vorhandenen 2,048-MBit/s-Takt auch als Bitfolgetakt in den Bursts, dann ergibt sich bei der angenommenen Burstlänge von etwa 25 μs eine Übertragungskapazität von z. B. etwa $3 \times 64$ kbit/s, d. h. Übertragungskapazität für beispielsweise zwei 64-kbit/s-Digitalkommunikationskanäle (beispielsweise für Digitalfernsprechen und Faksimile) und acht 8-kbit/s-Digitalkommunikationskanäle (für Signalisierung, Synchronisierung und Datenübertragung).

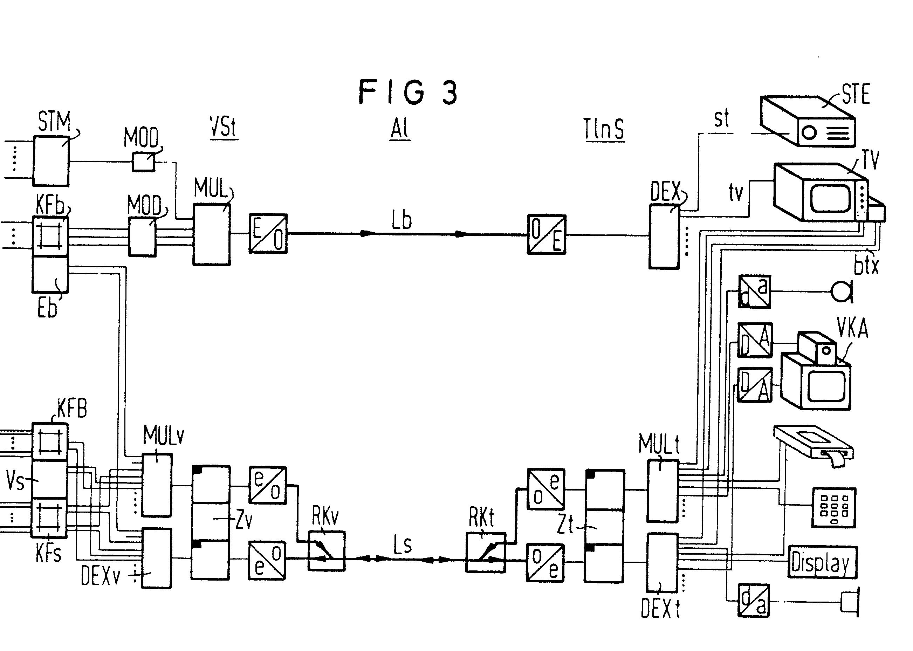

Die Zeichnung Fig. 3 zeigt ein Ausführungsbeispiel eines Breitbandkommunikationssystems gemäß der Erfindung, das zunächst einmal die auch im Breitbandkommunikationssystem gemäß Fig. 1 vorgesehenen Kommunikationsdienste vorsieht, darüber hinaus aber auch Digital-Bildfernsprechen, wobei über den Lichtwellenleiter Ls, über den die Digitalkommunikations-Schmalbandsignale in beiden Übertragungsrichtungen übertragen werden, auch die Bidirektional-Bildkommunikations-Digitalsignale zwischen Vermittlungsstelle VSt und Teilnehmerstelle TlnSt und umgekehrt übertragen werden.

Die zeichnerische Darstellung in Fig. 3 geht von der Darstellung in Fig. 1 aus, so daß die obenstehenden, sich auf Fig. 1 beziehenden Erläuterungen auch für das Ausführungsbeispiel gemäß Fig. 3 gelten und somit hier nicht wiederholt zu werden brauchen. Ergänzend ist dann in Fig. 3 angedeutet, daß die Teilnehmerstelle TlnSt auch eine Videokommunikationsanlage VKA mit einer Kamera und einem Bildschirmgerät aufweist und damit auch für bidirektionale Videokommunikation (Bildfernsprechen) eingerichtet ist. Die Videokommunikationsanlage VKA ist dabei in Senderichtung über einen Analog/Digital-Umsetzer D\A mit einem Eingang des Multiplexers MULt und in Empfangsrichtung über einen Digital/Analog-Umsetzer D/A mit einem Ausgang des Demultiplexers DEXt verbunden. In der Vermittlungsstelle VSt ist gemäß Fig. 3 mit einem Ausgang des Multiplexers MULv ein Eingang und mit einem Eingang des Demultiplexers DEXv ein zugehöriger Ausgang eines Bildkommunikations-Koppelfeldes KFB verbunden, das ebenfalls von der Vermittlungssteuerung Vs gesteuert wird und über das die Bildkommunikationsverbindungen durchvermittelt werden.

Über den Lichtwellenleiter Ls werden dann in beiden Richtungen neben beispielsweise 64-kbit/s-Fernsprechsignale, Faksimilesignale und (z. B. 8-kbit/s-)Steuersignale nun auch Bildfernsprechsignale bündelnde Multiplexsignale beispielsweise in Form von 8-Mbit/s- oder 34-Mbit/s-Digitalsignalen übertragen, wozu Multiplexer und Demultiplexer zusätzlich mit Multiplexgeräten DSMX2/8 (bei einem 8-Mbit/s-Digitalsignal) und zusätzlich DSMX8/34 (bei einem 34-Mbit/s-Digitalsignal) realisiert sein können.

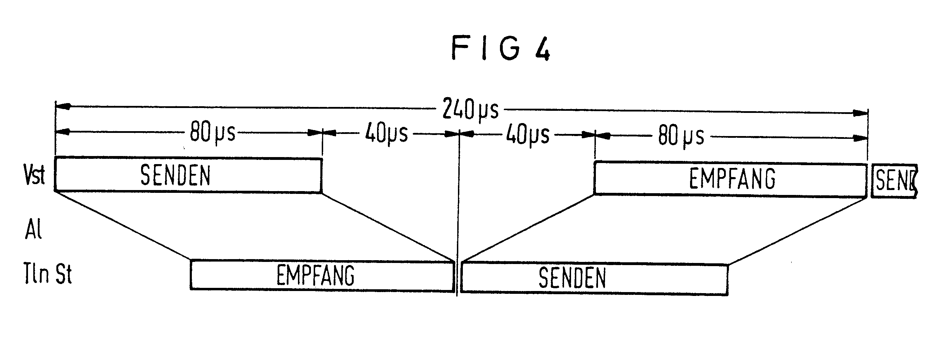

Ein Beispiel des zeitlichen Ablaufs einer entsprechenden Burst-Übertragung wird durch Fig. 4 verdeutlicht: Nach diesem Beispiel steht für einen 80 µs langen Digitalsignalblock (Burst) eine maximale Signallaufzeit von 40 µs je Übertragungsrichtung zur Verfügung, was einer Lichtwellenleiter-Länge (Reichweite) von etwa 8 km entspricht; innerhalb jedes Bursts können dabei jeweils beispielsweise 8 kbit mit einer Übertragungsgeschwindigkeit von z. B. 100 Mbit/s übertragen werden.

Abschließend sei noch bemerkt, daß das in Fig. 3 angedeutete Bildkoppelfeld KFB — wie übrigens ebenso auch das Breitbandkoppelfeld KFb — in einer ECL-Technik realisierte Koppelpunktschaltkreise aufweisen kann, die durch untereinander zu mehrstufigen Koppelpunktpyramiden verbundene steuerbare Multiplexer gebildet sind, wie dies auch bereits an anderer Stelle (DE-P 3 204 900.5) angegeben wird.

## Patentansprüche

1. Breitbandkommunikationssystem mit jeweils zwischen Vermittlungsstelle und Teilnehmerstelle verlaufenden, jeweils zwei Lichtwellenleiter aufweisenden Teilnehmeranschlußleitungen für TV- und/oder Stereoton-Breitbandsignale und demgegenüber schmalbandige Digitalkommunikationssignale, in dem über den einen Lichtwellenleiter (Lb) nur die TV- und/oder Stereoton-Breitbandsignale von der Vermittlungs- bzw. Verteilstelle (VSt) zur Teilnehmerstelle (TlnSt) übertragen werden und über den anderen Lichtwellenleiter (Ls) alle Digitalkommunikations-Schmalbandsignale, insbesondere 64-kbit/s-Digitalsignale, zwischen Vermittlungsstelle (VSt) und Teilnehmerstelle (TlnSt) und umgekehrt sowie Programmwahlsignale von der Teilnehmerstelle zur Vermittlungs- bzw. Verteilstelle im Multiplex übertragen werden, dadurch gekennzeichnet, daß über den genannten anderen Lichtwellenleiter (Ls) auch Bidirektional-Breitband-Bildkommunikations-Digitalsignale zwischen Vermittlungsstelle (VSt) und Teilnehmerstelle (TlnSt) und umgekehrt übertragen werden.

2. Breitbandkommunikationssystem nach Anspruch 1, dadurch gekennzeichnet, daß die Digitalkommunikationssignale der beiden Übertragungsrichtungen über den genannten anderen Lichtwellenleiter (Ls) im Zeitgetrenntlageverfahren übertragen werden.

3. Breitbandkommunikationssystem nach Anspruch 2, dadurch gekennzeichnet, daß die Digitalkommunikationssignale jeweils einer Übertragungsrichtung im Zeitmultiplex über den genannten anderen Lichtwellenleiter (Ls) übertragen werden.

4. Breitbandkommunikationssystem nach Anspruch 1, 2 oder 3, dadurch gekennzeichnet, daß die Breitbandsignale über den genannten einen Lichtwellenleiter (Lb) auf analogmodulierten Trägern übertragen werden.

## Claims

1. A wide-band communication system with respective subscriber connection lines between the exchange and each subscriber station, each comprising two light waveguides, for wide-band TV and/or stereo-sound signals and for comparatively narrow-band digital communications signals, in which only the wide-band TV and/or stereo-sound signals are transmitted from the exchange or distribution station (VSt) to the subscriber station (T1mSt) via the one light waveguide (Lb), and via the other light waveguide (Ls) all the narrow-band digital communications signals, in particular 64-kbit/s digital signals, are transmitted between the exchange (VSt) and the subscriber station (T1nSt) and vice versa and programme selection signals are transmitted from the subscriber station to the exchange or distribution station in multiplex, characterised in that via the aforementioned other light waveguide (Ls) bi-directional wide-band digital video-communications signals are also transmitted between the exchange (VSt) and the subscriber station (T1nSt) and vice versa.

2. A wide-band communication system as claimed in Claim 1, characterised in that the digital communications signals of the two directions of transmission are transmitted via the aforementioned other light waveguide (Ls) in time separation transmission mode (burst-mode).

3. A wide-band communication system as claimed in Claim 2, characterised in that the digital communications signals of the respective direction of transmission are transmitted in t.d.m. via the aforementioned other light waveguide (Ls).

4. A wide-band communication system as claimed in Claim 1, 2 or 3, characterised in that the wide-band signals are transmitted via the aforementioned first light waveguide (Lb) on analogue modulated carriers.

**Revendications**

1. Système de communication à large bande comportant des lignes d'abonnés s'étendant chacune entre un central et un poste d'abonné et comportant chacune deux guides de lumière, pour des signaux à large bande de télévision et/ou de stéréophonie et des signaux de communications numériques, possédant une bande étroite par rapport aux signaux précédents, et dans lequel seuls les signaux à large bande de télévision et/ou de stéréophonie sont transmis depuis le central ou le poste de réparation (VSt) en direction du poste d'abonné (TlnSt) par l'intermédiaire de l'un des guides de lumière (Lb), tandis que par l'intermédiaire de tous les autres guides de lumière (Ls) se trouvent transmis en multiplexe tous les signaux à bande étroite de communications numériques, notamment des signaux numériques à 64 kbit/s, entre un central (VSt) et un poste d'abonné (TlnSt) et inversement, ainsi que des signaux de sélection de programmes depuis le poste d'abonné au central ou au poste de répartition, caractérisé par le fait que des signaux numériques bidirectionnels de communication vidéo à large bande sont également transmis, par l'intermédiaire desdits autres guides de lumière (Ls), entre le central (VSt) et un poste d'abonnés (TlnSt) et inversement.

2. Système de communication à large bande selon la revendication 1, caractérisé par le fait que les signaux de communicationsnumériques des deux sens de transmission sont transmis par l'intermédiaire desdits autres guides de lumière (Ls), selon le procédé de transmission utilisant des créneaux temporels séparés.

3. Système de communication à large bande suivant la revendication 2, caractérisé par le fait que les signaux de communications numériques circulant respectivement dans un sens de transmisson sont transmis selon un multiplexe temporel par l'intermédiaire desdits autres guides de lumière (Ls).

4. Système de communication à large bande suivant la revendication 1, 2 ou 3, caractérisé par le fait que les signaux à large bande sont transmis sur des porteuses modulées de façon analogique par l'intermédiaire dudit guide de lumière (Lb).

FIG1

FIG2

FIG 3

# FIG 4

Vst · Al · Tln St : SENDEN — EMPFANG — SENDEN — EMPFANG — 240 µs (80 µs / 40 µs / 40 µs / 80 µs)